# FASCICULE DE BREVET EUROPEEN

(11) **EP 2 218 326 B1**
(45) Date de publication et mention de la délivrance du brevet: **29.06.2016**
(21) Numéro de dépôt: 10305156.1
(22) Date de dépôt: 16.02.2010
(51) Int. Cl.: A01K 1/06

(54) **Barrière du type cornadis, avec moyens de rappel de balancier(s) de contention en position ouverte**
Selbstfanggitter, mit einer Einrichtung, um das Gitter zu der geöffneten Position zurückzubringen.
Stanchion grid, with biasing means for returning the stanchion to the open position

(30) Priorité: 16.02.2009 FR 0900694
(43) Date de publication de la demande: 18.08.2010
(73) Titulaire: Cosnet, 72550 Coulans Sur Gee (FR)
(72) Inventeur: Cosnet, Gilbert, 72550, Degre (FR)
(74) Mandataire: Michelet, Alain

(56) Documents cités:
- EP-A- 0 838 151
- EP-A- 0 895 714
- DE-C1- 10 116 559
- FR-A- 2 313 866
- US-A- 6 082 306

## Description

La présente invention concerne une barrière du type cornadis, utilisée dans les enclos d'élevage, en particulier pour les bovins ou les ovins.

Les barrières du type cornadis sont utiles pour gérer l'alimentation des animaux, et aussi pour assurer certaines interventions, notamment soins vétérinaires, inséminations, etc.

Ce genre de barrière comprend un châssis vertical composé d'une paire de longerons horizontaux, entre lesquels sont répartis des barreaux verticaux.
Deux barreaux verticaux juxtaposés délimitent, avec les longerons horizontaux associés, une fenêtre pour le passage de la tête des animaux.
Chacune de ces fenêtres est équipée d'un balancier pour la contention des animaux, ce balancier étant mobile entre au moins deux positions : - une position d'ouverture, autorisant le passage de la tête de l'animal au travers de la fenêtre, et - une position de fermeture, empêchant ce même passage.
Un mécanisme de verrouillage est prévu pour bloquer le balancier dans la position de fermeture, de manière à assurer la contention de l'animal (ou encore pour interdire l'accès à la nourriture).
Ces barrières comportent encore des moyens aptes à assurer le retour automatique du balancier en position d'ouverture, depuis sa position de fermeture, suite à la désactivation des moyens de verrouillage. Ces moyens de rappel évitent une intervention manuelle sur les balanciers pour leur retour en position d'ouverture, après la libération des animaux ; la barrière est alors prête automatiquement à recevoir de nouveaux animaux. Ce genre de barrière est divulguée dans les documents EP-A-0 838 151, US-A-6 082 306, DE 101 16 559 C1, FR-A-2 313 866 and EP-A-0 895 714.

Or, la plupart des mécanismes de rappel actuels ne sont pas totalement satisfaisants, en ce sens qu'ils n'offrent pas toujours un compromis optimal entre, d'une part, une facilité de manoeuvre depuis la position d'ouverture jusqu'à la position de fermeture, et d'autre part, un retour efficace en position d'ouverture depuis la position de fermeture.
De plus, les mécanismes actuels utilisent généralement des pièces métalliques susceptibles de se rompre, avec les risques de blessures des animaux qui en découlent (notamment par ingestion).

Pour remédier à ces inconvénients, la demanderesse a développé une nouvelle structure de barrière qui est équipé d'un mécanisme de rappel visant à assurer une grande sécurité pour l'animal et un compromis optimal au niveau de la manoeuvre du balancier entre ses différentes positions (notamment d'ouverture et de fermeture). Ce système est de plus relativement économique, léger et simple à fabriquer.

La barrière correspondante est donc du type comprenant un châssis formant un ensemble de fenêtres prévues chacune pour le passage de la tête d'un animal, lesquelles fenêtres sont chacune délimitée par un cadre composé de deux longerons horizontaux (l'un supérieur et l'autre inférieur), reliés par deux barreaux fixes verticaux.
Ces fenêtres sont chacune équipées d'un balancier de contention qui est monté pivotant au sein du cadre, selon un axe horizontal perpendiculaire au plan général de la barrière, entre au moins deux positions : - une position inclinée d'ouverture, dans laquelle la tête de l'animal peut passer librement au travers de la fenêtre, et - une position de fermeture, dans laquelle ledit balancier est bloqué en pivotement par des moyens de verrouillage activables/désactivables, pour assurer notamment la contention de l'animal avec un premier barreau fixe en regard.
Ce balancier de contention est associé à des moyens de rappel aptes à assurer son retour automatique depuis sa position de fermeture jusqu'à sa position d'ouverture, suite à la désactivation desdits moyens de verrouillage.
Conformément à l'invention, les moyens de rappel du balancier comprennent un ressort de traction, réalisé en matériau élastomère et comportant deux extrémités : - une extrémité intérieure, fixée sur ledit balancier de contention, et - une extrémité extérieure, fixée au châssis de fenêtre ; ce ressort de traction est agencé de manière à être déformé selon une configuration allongée (ou étirée) lorsque le balancier de contention est déplacé en position de fermeture, pour exercer une force de traction sur ledit balancier de contention assurant son retour automatique en position d'ouverture suite à la désactivation des moyens de verrouillage associés.

Selon une caractéristique avantageuse, le balancier de contention comporte deux tronçons, l'un supérieur, s'étendant au-dessus de l'axe de pivotement, et l'autre inférieur, s'étendant au-dessous dudit axe de pivotement ; l'extrémité intérieure du ressort de traction est fixée sur ledit tronçon supérieur.
Dans ce cas, le ressort de traction comporte avantageusement un axe d'allongement/étirement horizontal, ou au moins approximativement horizontal, qui se situe au-dessus du plan horizontal passant par l'axe de pivotement du balancier de contention.

Selon une autre particularité, le balancier de contention est monté pivotant sur une chape portée par le second barreau vertical de la fenêtre, et l'extrémité extérieure du ressort de traction est fixée sur ladite chape.
Dans ce cas, la chape porteuse comprend avantageusement deux branches entre les extrémités libres desquelles est rapporté le balancier de contention, et l'extrémité extérieure du ressort de traction est fixée entre lesdites branches de chape.

Toujours selon l'invention, le ressort de traction comprend deux bras élastiques, aptes à assurer chacun une action ressort, lesquels bras s'étendent de part et d'autre du balancier de contention et sont fixés sur ce dernier au niveau de leurs extrémités intérieures respectives.
Les bras correspondants du ressort de traction comportent avantageusement chacun au moins un évidement, s'étendant sur au moins une partie de leur longueur et de leur épaisseur, pour ajuster les caractéristiques élastiques du ressort.

Selon une forme de réalisation particulière, les bras du ressort de traction ont une extrémité extérieure commune, formant ainsi une pièce en forme générale de U, dont les bras s'étendent horizontalement et parallèlement ou au moins approximativement parallèlement l'un par rapport à l'autre ; de plus, ces bras ont une bordure inférieure au contact, ou pratiquement au contact, de la bordure supérieure des branches de chape, et leur extrémité extérieure comporte un prolongement monobloc à l'équerre s'étendant et étant fixé entre les deux branches de chape.

Selon un mode de réalisation intéressant, le ressort de traction consiste en une pièce réalisée monobloc dans un matériau du type caoutchouc.

L'invention concerne encore le ressort de traction décrit ci-dessus, réalisé dans un matériau élastomère et qui se présente sous la forme d'une pièce en U comprenant deux bras élastiques s'étendant parallèlement ou au moins approximativement parallèlement l'un par rapport à l'autre, lesquels bras ont deux extrémités munies d'orifices de fixation au cornadis : - des extrémités intérieures libres distinctes, et - une extrémité extérieure commune comportant un prolongement monobloc à l'équerre, destinées à être fixées respectivement au balancier de contention et au châssis de cornadis.

L'invention sera encore illustrée, sans être aucunement limitée, par la description suivante d'une forme de réalisation particulière, donnée uniquement à titre d'exemple et représentée sur les dessins annexés dans lesquels :
- la figure 1 est une vue de face de la barrière conforme à l'invention, montrant son balancier en position d'ouverture avec son ressort de traction associé ;
- la figure 2 est une vue agrandie de la figure 1 au niveau du ressort de traction (l'une des branches de la chape porteuse n'étant pas représentée) ;
- la figure 3 est une vue générale et en perspective du ressort de traction équipant la barrière de la figure 1 ;
- les figures 4 et 5 montrent ce même ressort de traction, vu respectivement de côté et de dessus ;
- les figures 6 et 7 sont encore des vues de face de la barrière selon la figure 1, dans lesquelles le balancier de contention est placé respectivement dans une position de fermeture et une position de dégagement.

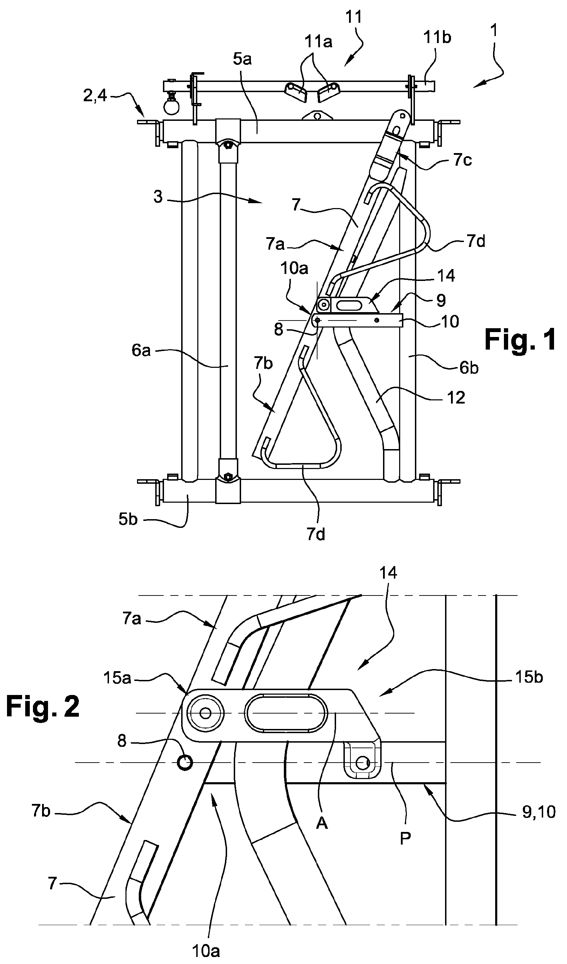

La barrière 1, représentée figure 1, comprend un châssis vertical 2 constitué d'un ensemble de barreaux, et formant ici une unique fenêtre 3 pour le passage de la tête d'un animal.
Le châssis 2 de cette barrière 1 peut former, en pratique, une pluralité de telles fenêtres 3, alignées les unes à côté des autres dans un même plan vertical.

Chaque fenêtre 3 est délimitée par un cadre vertical rectangulaire 4 (constitutif du châssis 2) composé de deux longerons horizontaux 5, l'un supérieur 5a et l'autre inférieur 5b, reliés par deux montants verticaux 6 : un premier montant 6a (à gauche sur la figure 1) et un second montant 6b (à droite sur cette même figure 1).

La fenêtre 3 est encore équipée d'un balancier 7, pour assurer notamment la contention d'un animal.

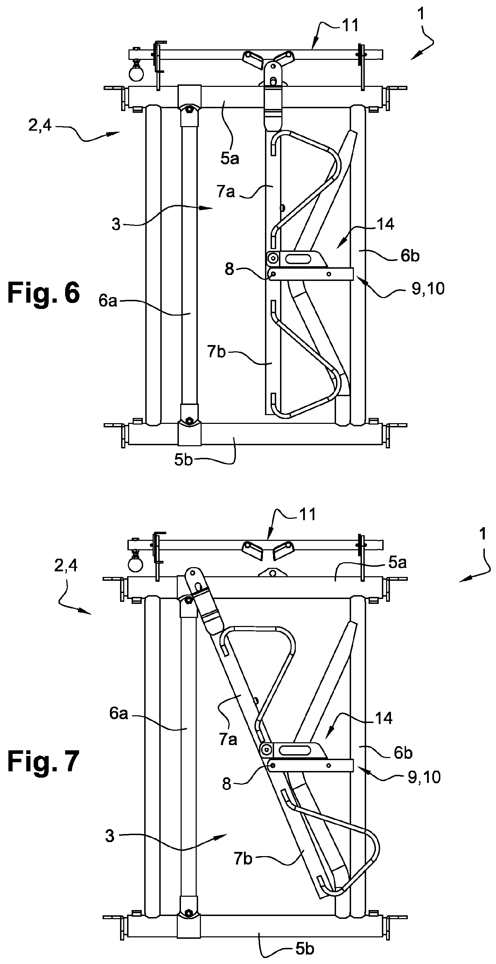

Le balancier 7 consiste ici en un barreau, rectiligne et tubulaire, monté pivotant sur une chape porteuse 9, autour d'un axe 8 horizontal et perpendiculaire au plan général vertical de la barrière 1.
Comme décrit par la suite, ce balancier 7 peut être disposé suivant trois principales positions, par un pivotement approprié au sein du cadre 4 et autour de son axe 8 : une position d'ouverture (figure 1), une position de fermeture (figure 6) ou une position de dégagement (figure 7).

Le balancier 7 comporte deux tronçons de longueur, situés de part et d'autre de l'axe de pivotement 8 : - un tronçon supérieur 7a, s'étendant au-dessus dudit axe 8, et - un tronçon inférieur 7b, s'étendant au-dessous de cet axe 8.
L'axe de pivotement 8 se situe ici légèrement au-dessous du milieu de la longueur du balancier 7.

La chape 9, porteuse du balancier 7, est ici fixée sur le second montant vertical 6b du cadre 4.
Cette chape porteuse 9 comprend deux branches 10 parallèles et à distance l'une de l'autre, entre les extrémités libres 10a desquelles est rapporté le balancier 7.
Ces branches 10 s'étendent en plus dans un plan horizontal, ou au moins approximativement horizontal.

L'extrémité supérieure 7c du balancier 7 consiste en une structure apte à venir coopérer avec des moyens de verrouillage activables/désactivables 11 de la barrière 1, pour assurer le blocage dudit balancier 7 en position de fermeture (comme décrit ci-après en relation avec la figure 6).
Cette extrémité supérieure 7c consiste par exemple en une fourche (dont les branches viennent de part et d'autre du longeron supérieur 5a) munie d'une tige transversale coopérant avec les moyens de verrouillage 11.
Ces moyens de verrouillage 11 sont ici du type de ceux décrits dans le document FR-2 737 951. Ils consistent en une paire de taquets 11a qui sont solidaires et articulés sur une tringle pivotante 11b disposée au-dessus du longeron supérieur 5a. La rotation de la tringle 11b permet la manoeuvre des taquets 11a entre deux positions : - une position active déployée, au dessous de la tringle 11b tel que représenté sur la figure 1, et - une position inactive escamotée, au dessus de cette même tringle 11 b (non représentée).

Le balancier 7 comprend, en outre, des structures 7d pour condamner l'espace séparant ledit balancier 7 et le second montant 6b.
Ces moyens de condamnation 7d s'étendent dans le plan général de la barrière 1. Ils consistent ici chacun en une tige coudée, rappelant une forme générale de V.

Tel que représenté sur la figure 1, une barre coudée 12 s'étend verticalement au sein du cadre 4, entre les deux branches 10 de la chape porteuse 9, agencée pour renforcer la résistance mécanique de la chape 9 et aussi pour concourir à condamner l'espace séparant le balancier 7 et le second montant 6b.

La barre coudée 12 est ici fixée - au niveau de son extrémité inférieure, sur le longeron inférieur 5b et à proximité du second montant vertical 6b, et - au niveau de son extrémité supérieure, sur le second montant vertical 6b, à proximité de longeron supérieur 5a.
Cette barre 12 se compose principalement - de deux tronçons rectilignes divergents, situés de part et d'autre de la chape porteuse 9, et - d'un tronçon coudé, reliant lesdits tronçons rectilignes et situé au niveau de ladite chape 9. Cette dernière portion coudée se situe à distance du montant vertical associé 6b.

Le balancier 7 coopère encore avec des moyens de rappel 14, aptes à assurer son retour automatique en position d'ouverture (selon la figure 1), depuis une position pivotée (la position de fermeture selon la figure 6 ou la position de dégagement selon la figure 7) suite à l'inactivation des moyens de verrouillage 11.

Conformément à l'invention, ces moyens de rappel 14 consistent en un ressort de traction réalisé en matériau élastomère, de préférence en caoutchouc.

Ce ressort de traction 14 est agencé de manière à être déformé élastiquement selon une configuration allongée ou étirée, lorsque le balancier 7 est pivoté en position de fermeture (figure 6) ou en position de dégagement (figure 7).
Cet agencement permet alors au ressort 14 d'exercer une force de traction sur le balancier 7, assurant le retour automatique de ce dernier vers sa position d'ouverture (figure 1) après désactivation des moyens de verrouillage 11 ou plus généralement lorsque le balancier 7 ne fait plus l'objet de contraintes.

En l'occurrence, tel que représenté en particulier sur la figure 2, ce ressort de axe A horizontal, ou au moins approximativement horizontal, qui se situe au-dessus du plan horizontal P passant par l'axe de pivotement 8 du balancier 7 (ce plan P passe également au niveau des branches de chape 10).
A titre d'exemple, la distance verticale séparant l'axe d'allongement/étirement A et le plan P passant par l'axe de pivotement 8 est avantageusement comprise entre 3 et 6 cm, de préférence voisine de 4, 5 cm.

Pour cela, le ressort de traction 14 est ici positionné directement au-dessus de la chape porteuse 9 (éventuellement au contact de cette dernière), de sorte que :
- son extrémité intérieure 15a soit fixée sur le balancier 7, en l'occurrence au niveau de son tronçon supérieur 7a et à proximité de l'axe de pivotement 8, et
- son extrémité extérieure 15b soit fixée au châssis de fenêtre 2, en l'occurrence sur la chape porteuse 9 (entre son extrémité libre 10a et le second montant 6b).

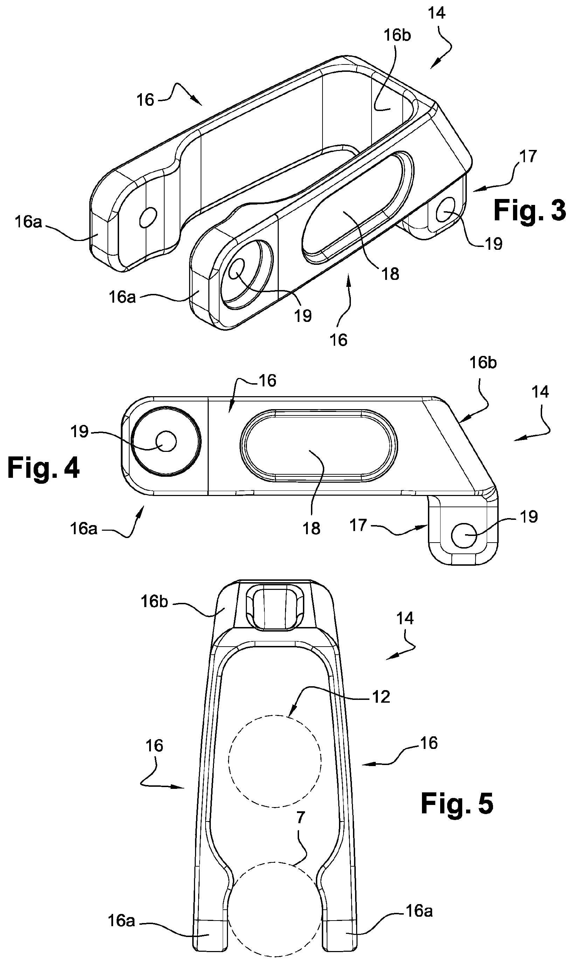

La structure de ce ressort de traction 14 est représentée plus en détail sur les figures 3, 4 et 5.

Le ressort 14 consiste ici en une pièce monobloc, présentant une forme générale de U vu de dessus. Il se compose de deux bras élastiques latéraux 16, ici en forme générale de platines rectangulaires, s'étendant approximativement parallèlement l'un par rapport à l'autre.
Les dimensions de ces bras 16 (épaisseur, longueur et hauteur), et aussi le matériau constitutif, sont adaptés en fonction des caractéristiques d'élasticité recherchées.

Ces bras latéraux 16 comportent deux extrémités correspondant aux extrémités du ressort 14 :
- des premières extrémités distinctes 16a, formant l'extrémité intérieure 15a et destinées à être fixées au balancier 7, et
- une seconde extrémité commune 16b, formant l'extrémité extérieure 15b et destinée à être fixée ici à la chape porteuse 9.

Les faces en regard des premières extrémités 19a comportent chacune une surface présentant une courbure apte à épouser une partie du contour du balancier 7.

L'extrémité extérieure commune 16b comporte quant à elle un prolongement monobloc à l'équerre 17 (visibles sur les figures 2 à 4), destiné à s'étendre vers le bas, entre les branches 10 de la chape 9 pour permettre sa fixation.

Ces extrémités 16a et 16b du ressort 14 sont munies d'orifices traversants 19 pour permettre une fixation par tout moyen approprié sur le châssis de barrière 2, par exemple par boulonnage ou au moyen de goupilles (au travers d'orifices adaptés complémentaires, ménagés dans le balancier 7 et dans la chape 9).

Pour ajuster leur déformation élastique, les bras 16 comportent encore chacun un évidement borgne 18 sur leur face longitudinale extérieure, ici de forme générale oblongue, ménagé dans une partie de leur épaisseur.
Cet évidement 18 s'étend sur pratiquement toute la longueur et toute la hauteur du bras 16 ; il s'ouvre en plus vers l'extérieur, à l'opposé du bras 16 en regard.

Pour son montage sur la barrière et tel que représenté schématiquement sur la figure 5, le ressort de traction 14 est positionné de sorte que - ses bras 16 s'étendent de part et d'autre du montant de renfort 12, et - les extrémités distinctes 16a de ces même bras 16 viennent prendre en sandwich le balancier 7.
Le prolongement 17 de son extrémité 16b est fixé entre les branches 10 de la chape 9 (figure 2).
Tel que représenté sur la figure 2, la bordure inférieure des bras 16 (du côté du prolongement à l'équerre 17) vient au contact, ou pratiquement en contact, de la bordure supérieure des branches de chape 10, ce qui permet en particulier de limiter l'encombrement de l'organe ressort 14.

En pratique, au repos, le balancier 7 est en position d'ouverture (figure 1), dans laquelle il est incliné par rapport aux montants 6. Son extrémité supérieure 7c se situe à proximité du second montant 6b.
L'animal peut introduire sa tête dans l'espace de la fenêtre 3 séparant le balancier 7 et le premier montant 6a du cadre 4.

Lorsque il passe sa tête au travers de cette fenêtre 3 et se penche vers le bas pour se nourrir, l'animal appuie sur le tronçon inférieur 7b du balancier 7 qui pivote autour de l'axe 8 jusqu'à atteindre une position verticale de contention ou de fermeture (figure 6). Lors de cette manoeuvre, le balancier 7 se bloque automatiquement en position grâce aux moyens de verrouillage dédiés 11 ; le ressort de traction 14 est déformé longitudinalement dans sa configuration allongée/étirée, par le déplacement de son extrémité intérieure 15a par rapport à son extrémité extérieure fixe 15b (plus précisément, ce sont les bras 16 de ce ressort qui s'allongent, avec les premières extrémités 16a s'éloignant de la première extrémité 16b).
L'animal est alors entravé, sa tête ne pouvant ressortir de la fenêtre 3 du fait de l'espace réduit séparant le balancier 7 et le premier montant 6a en regard.
Cette position de fermeture peut également être utile pour empêcher l'animal d'accéder à l'alimentation (l'animal ne pouvant pas introduire sa tête au travers de la fenêtre 3).

Pour libérer l'animal, il suffit à l'opérateur de désactiver les moyens de verrouillage 11.
Le ressort 14, dans une configuration allongée élastiquement, exerce alors une force de traction sur le balancier 7 et provoque son retour automatique en position d'ouverture (figure 1). Ce sont ici les bras 16 du ressort 14 qui exercent cette traction.

Dans le cas où l'animal viendrait à bloquer sa tête en partie inférieure de la fenêtre 3, le balancier 7 peut encore être manoeuvré dans une position de dégagement représentée sur la figure 7 (l'extrémité supérieure 7c du balancier 7 étant placée du côté du premier montant 6a).
Là encore, cette manoeuvre du balancier 7 provoque l'allongement du ressort de traction 14, assurant le retour en position de repos du balancier 7, une fois la tête de l'animal dégagée.

La barrière du type cornadis selon l'invention, avec son ressort de traction particulier, a l'intérêt d'autoriser une manoeuvre optimale du balancier de contention autour de son axe de pivotement.
Ce ressort de traction présente en plus un encombrement relativement limité, et il assure une innocuité totale pour l'animal (sans risque de pincement, d'intoxication, de blessures, etc.).

## Revendications

1. Barrière du type cornadis comprenant un châssis (2) formant un ensemble de fenêtres (3) prévues chacune pour le passage de la tête d'un animal, lesquelles fenêtres (3) sont chacune délimitée par un cadre (4) composé de deux longerons horizontaux (5), l'un supérieur (5a) et l'autre inférieur (5b), reliés par deux barreaux fixes verticaux (6), lesquelles fenêtres (3) sont encore chacune équipées d'un balancier de contention (7) qui est monté pivotant au sein dudit cadre (4), selon un axe horizontal (8) perpendiculaire au plan général de la barrière (1), entre au moins deux positions :
- une position d'ouverture, dans laquelle la tête de l'animal peut passer librement au travers de ladite fenêtre (3) associée, et
- une position de fermeture, dans laquelle ledit balancier (7) est bloqué en pivotement par des moyens de verrouillage activables/désactivables (11), pour assurer avec un premier barreau fixe (6a) en regard notamment la contention de l'animal,
lequel balancier de contention (7) est associé à des moyens de rappel (14) aptes à assurer son retour automatique depuis sa position de fermeture jusqu'à sa position d'ouverture, suite à la désactivation desdits moyens de verrouillage (11),
**caractérisée en ce que** lesdits moyens de rappel (14) du balancier (7) comprennent un ressort de traction (14), réalisé en matériau élastomère et comportant deux extrémités (15) : - une extrémité intérieure (15a), fixée sur ledit balancier de contention (7), et - une extrémité extérieure (15b), fixée audit châssis de fenêtre (2),
et **en ce que** lequel ressort de traction (14) est agencé de manière à être déformé selon une configuration étirée lorsque ledit balancier de contention (7) est déplacé en position de fermeture, pour exercer une force de traction sur ledit balancier de contention (7) assurant son retour automatique en position d'ouverture suite à la désactivation des moyens de verrouillage (11) associés.

2. Barrière du type cornadis selon la revendication 1, **caractérisée en ce que** le balancier de contention (7) comporte deux tronçons, l'un supérieur (7a), s'étendant au-dessus de l'axe de pivotement (8), et l'autre inférieur (7b), s'étendant au-dessous dudit axe de pivotement (8), l'extrémité intérieure (15a) du ressort de traction (14) étant fixée sur ledit tronçon supérieur (7a).

3. Barrière du type cornadis selon la revendication 2, **caractérisée en ce que** le ressort de traction (14) comporte un axe d'allongement/étirement A s'étendant dans un plan horizontal, ou au moins approximativement horizontal, qui se situe au-dessus du plan horizontal P passant par l'axe de pivotement (8) du balancier de contention (7).

4. Barrière du type cornadis selon l'une quelconque des revendications 1 à 3, **caractérisée en ce que** le balancier de contention (7) est monté pivotant sur une chape (9) portée par le second barreau vertical (6b) de la fenêtre (3), et **en ce que** l'extrémité extérieure (15b) du ressort de traction (14) est fixée sur ladite chape.

5. Barrière du type cornadis selon la revendication 4, **caractérisée en ce que** la chape (9) porteuse du balancier de contention (7) comprend deux branches (10) entre les extrémités libres (10a) desquelles est rapporté ledit balancier de contention (7), et **en ce que** l'extrémité extérieure (15b) du ressort de traction est fixée entre lesdites branches de chape (10).

6. Barrière du type cornadis selon l'une quelconque des revendications 1 à 5, **caractérisée en ce que** le ressort de traction (14) comprend deux bras élastiques (16), aptes à assurer chacun une action ressort, lesquels bras (16) s'étendent de part et d'autre du balancier de contention (7) et sont fixés sur ce dernier au niveau de leurs extrémités intérieures respectives (16a).

7. Barrière du type cornadis selon la revendication 6, **caractérisée en ce que** les bras (16) du ressort de traction (14) comportent chacun au moins un évidement (18), s'étendant sur au moins une partie de leur longueur et de leur épaisseur, pour ajuster les caractéristiques élastiques dudit ressort (14).

8. Barrière du type cornadis selon l'une quelconque des revendications 6 ou 7, prise en combinaison avec la revendication 5, **caractérisée en ce que** les bras (16) du ressort de traction (14) ont une extrémité extérieure commune (16b), formant ainsi une pièce en forme générale de U, dont les bras (16) s'étendent horizontalement et parallèlement ou au moins approximativement parallèlement l'un par rapport à l'autre, la bordure inférieure desdits bras étant au contact, ou pratiquement au contact, de la bordure supérieure des branches de chape (10), et leur extrémité extérieure (16b) comportant un prolongement monobloc à l'équerre (17) s'étendant et étant fixé entre les deux branches de chape (10).

9. Barrière du type cornadis selon l'une quelconque des revendications 1 à 8, **caractérisée en ce que** le ressort de traction (14) consiste en une pièce réalisée monobloc dans un matériau du type caoutchouc.

10. Organe pour la manoeuvre d'un balancier de contention équipant une barrière du type cornadis, **caractérisé en ce qu'**il consiste en un ressort de traction (14) réalisé dans un matériau élastomère, qui se présente sous la forme d'une pièce en U comprenant deux bras élastiques (16) s'étendant parallèlement ou au moins approximativement parallèlement l'un par rapport à l'autre, lesquels bras (16) ont deux extrémités (16a, 16b) munies d'orifices (19) de fixation au cornadis : - des extrémités intérieures libres distinctes (16a), et - une extrémité extérieure commune (16b) comportant un prolongement monobloc à l'équerre (17), destinées à être fixées respectivement au balancier de contention (7) et au châssis de cornadis (2).

## Patentansprüche

1. Selbstfanggitter mit einem Chassis (2), das eine Gesamtheit von Fenstern (3) bildet, von denen jedes für das Hindurchgehen des Kopfes eines Tiers vorgesehen ist, wobei jedes der Fenster (3) von einem Rahmen (4) begrenzt ist, der aus zwei horizontalen Trägern (5), einem oberen (5a) und einem unteren (5b), welche durch zwei feste vertikale Stäbe (6) verbunden sind, zusammengesetzt ist, wobei jedes der Fenster (3) außerdem mit einem Einschränkungspendel (7) ausgestattet ist, das am besagten Rahmen (4) um eine horizontale, zur allgemeinen Ebene des Gitters (1) senkrechte Achse (8) zwischen wenigstens zwei Positionen schwenkbar angebracht ist, und zwar:
- einer Öffnungsposition, in der der Kopf des Tieres frei durch das zugeordnete Fenster (3) hindurchgehen kann, und
- einer Schließposition, in der das Pendel (7) durch aktivierbare/deaktivierbare Verriegelungsmittel (11) am Schwenken gehindert ist, um mit einer gegenüberliegenden ersten festen Stange (6a) insbesondere ein Zurückhalten des Tieres sicherzustellen, wobei das Einschränkungspendel (7) Rückholmitteln (14) zugeordnet ist, die geeignet sind, dessen automatische Rückkehr aus seiner Schließposition bis zu seiner Öffnungsposition nach einem Deaktivieren der Verriegelungsmittel (11) sicherzustellen,
**dadurch gekennzeichnet, daß** die Rückholmittel (14) des Pendels (7) eine aus einem Elastomermaterial gefertigte Zugfeder (14) aufweisen, die zwei Enden (15) aufweist: - ein inneres Ende (15a), das an dem Einschränkungspendel (7) befestigt ist, und - ein äußeres Ende (15b), das am Chassis (2) des Fensters befestigt ist,
und daß die Zugfeder (14) derart ausgelegt ist, daß sie gemäß einer gestreckten Konfiguration verformt wird, wenn das Einschränkungspendel (7) in die Schließposition gebracht wird, um eine Zugkraft auf das Einschränkungspendel (7) auszuüben, die dessen automatische Rückkehr in die Öffnungsposition nach einem Deaktivieren der Verriegelungsmittel (11) sicherstellen.

2. Selbstfanggitter gemäß Anspruch 1, **dadurch gekennzeichnet, daß** das Einschränkungspendel (7) zwei Abschnitte aufweist, einen oberen (7a), der sich oberhalb der Schwenkachse (8) erstreckt, und einen unteren (7b), der sich unterhalb der Schwenkachse erstreckt, wobei das innere Ende (15a) der Zugfeder (14) am oberen Abschnitt (7a) befestigt ist.

3. Selbstfanggitter gemäß Anspruch 2, **dadurch gekennzeichnet, daß** die Zugfeder (14) eine Auszugs- bzw. Streckachse A aufweist, sie sich in einer horizontalen oder wenigstens näherungsweise horizontalen Ebene erstreckt, die oberhalb der durch die Schwenkachse (8) des Einschränkungspendels (7) gehenden horizontalen Ebene P liegt.

4. Selbstfanggitter gemäß einem der Ansprüche 1 bis 3, **dadurch gekennzeichnet, daß** das Einschränkungspendel (7) an einer von der zweiten senkrechten Stange (6b) des Fensters (3) getragenen Gabel (9) befestigt ist und daß das äußere Ende (15b) der Zugfeder (14) an der Gabel befestigt ist.

5. Selbstfanggitter gemäß Anspruch 4, **dadurch gekennzeichnet, daß** die das Einschränkungspendel (7) tragende Gabel (9) zwei Schenkel (10) aufweist, zwischen deren freien Enden (10a) das Einschränkungspendel (7) angebracht ist, und daß das äußere Ende (15b) der Zugfeder zwischen den beiden Schenkeln der Gabel befestigt ist.

6. Selbstfanggitter gemäß einem der Ansprüche 1 bis 5, **dadurch gekennzeichnet, daß** die Zugfeder (14) zwei elastische Schenkel (16) aufweist, von denen jeder geeignet ist, als Feder zu wirken, wobei sich die Schenkel (16) beiderseits des Einschränkungspendels (7) erstrecken und an letzterem im Bereich von deren jeweiligem inneren Ende (16a) befestigt sind.

7. Selbstfanggitter gemäß Anspruch 6, **dadurch gekennzeichnet, daß** jeder der Schenkel (16) der Zugfeder (14) wenigstens eine Öffnung (18) aufweist, die sich zumindest über einen Teil von dessen Länge und dessen Dicke erstreckt, um die elastischen Eigenschaften der Feder (14) einzustellen.

8. Selbstfanggitter gemäß einem der Ansprüche 6 oder 7 zusammen mit Anspruch 5, **dadurch gekennzeichnet, daß** die Schenkel (16) der Zugfeder (14) ein gemeinsames äußeres Ende (16b) aufweisen, das so ein im Wesentlichen U-förmiges Teil bildet, dessen Schenkel (16) sich horizontal und zueinander parallel oder wenigstens näherungsweise parallel erstrecken, wobei der untere Rand mit dem oberen Rand der Schenkel der Gabel (10) zusammenkommen oder weitgehend zusammenkommen, und wobei deren äußeres Ende (16b) eine querliegende einstückige Verlängerung (17) aufweist, die sich zwischen den beiden Schenkeln der Gabel (10) erstreckt und an diesen befestigt ist.

9. Selbstfanggitter gemäß einem der Ansprüche 1 bis 8, **dadurch gekennzeichnet, daß** die Zugfeder (14) aus einem einstückig aus einem kautschukartigen Material gefertigten Teil besteht.

10. Organ zum Betätigen eines Einschränkungspendels, das ein Selbstfanggitter bestückt, **dadurch gekennzeichnet, daß** es aus einer Zugfeder (14) besteht, die aus einem Elastomermaterial gefertigt ist, die sich als U-förmiges Teil darstellt, das zwei sich horizontal und zueinander parallel oder wenigstens näherungsweise parallel erstreckende Schenkel (16) aufweist, wobei die beiden Schenkel (16) zwei mit Öffnungen (19) zur Befestigung am Selbstfanggitter versehene Enden (16a, 16b), - getrennte innere freie Enden (16a) und - ein gemeinsames äußeres Ende (16b) mit einer einstückigen querliegenden Verlängerung (17) aufweisen, die dazu bestimmt sind, am Einschränkungspendel (7) und am Chassis des Selbstfanggitters (2) befestigt zu werden.

## Claims

1. A head lock barrier comprising a framework (2) forming a set of windows (3) each provided for the passage of an animal's head, wherein the windows (3) are each delimited by a frame (4) consisted of two horizontal frame bars (5), an upper one (5a) and a lower one (5b), connected by two fixed vertical bars (6), wherein the windows (3) are also each equipped with a restraining rocking arm (7) that is pivotally mounted within said frame (4), about a horizontal axis (8) perpendicular to the general plane of the barrier (1), between at least two positions:
- an open position, in which the animal's head can pass freely through said associated window (3), and
- a closed position, in which said rocking arm (7) is pivotally locked by activable/deactivable locking means (11), to ensure with a first opposite fixed bar (6a), in particular, the restraining of the animal, where in the restraining rocking arm (7) is associated with return means (14) adapted to ensure its automatic return from its closed position to its open position, after the deactivation of said locking means (11),
**characterized in that** said return means (14) of the rocking arm (7) comprise a pulling spring (14), made of an elastomeric material and including two ends (15): - a inner end (15a), fastened to said restraining rocking arm (7), and - an outer end (15b), fastened to said window framework (2),
and **in that** said pulling spring (14) is arranged so as to be deformed according to an extended configuration when said restraining rocking arm (7) is displaced to the closed position, to exert a pulling force on said restraining rocking arm (7), ensuring the automatic return of the latter to the open position after deactivation of the associated locking means (11).

2. The head lock barrier according to claim 1, **characterized in that** the restraining rocking arm (7) includes two sections, an upper one (7a), extending above the pivoting axis (8), and a lower one (7b), extending under said pivoting axis (8), the inner end (15a) of the pulling spring (14) being fastened to said upper section (7a).

3. The head lock barrier according to claim 2, **characterized in that** the pulling spring (14) includes an elongation/extension axis A extending in an horizontal or at least approximately horizontal plane, which is located above the horizontal plane P passing through the pivoting axis (8) of the restraining rocking arm (7).

4. The head lock barrier according to any one of claims 1 to 3, **characterized in that** the restraining rocking arm (7) is pivotally mounted on a cap piece (9) carried by the second vertical bar (6b) of the window (3), and **in that** the outer end (15b) of the pulling spring (14) is fastened to said cap piece.

5. The head lock barrier according to claim 4, **characterized in that** the cap piece (9) carrying the restraining rocking arm (7) comprises two legs (10), between the free ends (10a) of which is added said restraining rocking arm (7), and **in that** the outer end (15b) of the pulling spring is fastened between said cap piece legs (10).

6. The head lock barrier according to any one of claims 1 to 5, **characterized in that** the pulling spring (14) comprises two elastic arms (16), each adapted to ensure a spring action, wherein the arms (16) extend on either side of the restraining rocking arm (7) and are fastened to the latter at their respective inner ends (16a).

7. The head lock barrier according to claim 6, **characterized in that** the arms (16) of the pulling spring (14) each include at least one recess (18), extending over at least one part of their length and their thickness, to adjust the elastic properties of said spring (14).

8. The head lock barrier according to any one of claims 6 or 7, taken in combination with claim 5, **characterized in that** the arms (16) of the pulling spring (14) have a common outer end (16b), hence forming a generally U-shaped part, whose arms (16) extend horizontally and parallel or at least approximately parallel to each other, the lower edge of said arms being in contact, or almost in contact, with the upper edge of the cap piece legs (10), and their outer end (16b) including a single-piece square extension (17) extending and being fastened between the two cap piece legs (10).

9. The head lock barrier according to any one of claims 1 to 8, **characterized in that** the pulling spring (14) consists in a single-piece part made of a rubber-type material.

10. Element for manoeuvring a restraining rocking arm equipping a head lock barrier, **characterized in that** it consists of a pulling spring (14) made of an elastomeric material, which is in the form of a U-shaped part comprising two elastic arms (16) extending parallel or at least approximately parallel to each other, wherein the arms (16) have two ends (16a, 16b) provided with orifices (19) for the fastening to the head lock: - distinct free inner ends (16a), and - a common outer end (16b) including a single-piece square extension (17), intended to be respectively fastened to the restraining rocking arm (7) and to the head lock framework (2).
